**Europäisches Patentamt**

**European Patent Office**

**Office européen des brevets**

(19)

(11) Numéro de publication : **0 399 906 B1**

(12) **FASCICULE DE BREVET EUROPEEN**

(45) Date de publication du fascicule du brevet :
29.03.95 Bulletin 95/13

(51) Int. Cl.⁶ : **G06K 11/16**

(21) Numéro de dépôt : **90401376.0**

(22) Date de dépôt : **22.05.90**

(54) **Table à numériser.**

(30) Priorité : **22.05.89 FR 8906661**

(43) Date de publication de la demande :
**28.11.90 Bulletin 90/48**

(45) Mention de la délivrance du brevet :
**29.03.95 Bulletin 95/13**

(84) Etats contractants désignés :
**DE FR GB IT NL SE**

(56) Documents cités :
**EP-A- 0 259 894**
**EP-A- 0 295 699**

(73) Titulaire : **Océ Graphics France S.A.**
**1, Rue Jean Lemoine**
**F-94000 Créteil (FR)**

(72) Inventeur : **Sico, Christian**
**80, rue Victor Hugo**
**F-94700 Maisons-Alfort (FR)**
Inventeur : **Gascuel, Yves**
**15, Chemin des Justices**
**F-91370 Verrières le Buisson (FR)**

(74) Mandataire : **Hanneman, Henri W.A.M. et al**
**Océ-Nederland B.V.**
**Patents and Information**
**St. Urbanusweg 43**
**P.O. Box 101**
**NL-5900 MA Venlo (NL)**

EP 0 399 906 B1

## Description

La présente invention concerne une table à numériser à couplage électromagnétique, et plus particulièrement une table à numériser dans laquelle sont logées des bobines de localisation constituant une trame, un curseur mobile par rapport à la table et comprenant une bobine émettrice alimentée par un courant alternatif, et un circuit de traitement recevant des signaux induits dans les bobines de localisation par couplage électromagnétique avec la bobine émettrice et comportant des moyens de calcul pour déterminer, à partir de l'amplitude des signaux des bobines de localisation, une première coordonnée x, mesurée suivant une première direction de la table, et une deuxième coordonnée y, mesurée suivant une deuxième direction de la table, établissant la position de la bobine émettrice par rapport à la table.

Une telle table est décrite dans le document EP-A-0 307 667. Avec cette table de l'art antérieur, les coordonnées de position sont déterminées à partir des amplitudes des signaux de détection qui sont induits dans les bobines de la table par la bobine émettrice. Cette opération s'effectue par une interpolation d'amplitude. Pour ce faire, on calque une courbe, représentant par exemple une fonction quadratique, sur les amplitudes d'un groupe de tensions de détection provenant des bobines qui entourent celle ayant la tension de détection la plus importante.

Un inconvénient avec une telle table réside dans le fait que toutes les tensions de détection doivent être comparées entre elles afin de pouvoir déterminer celle qui est la plus importante.

Cette technique de l'art antérieur a également l'inconvénient d'être limitée en raison de la nature approximative de la courbe à calquer par rapport à la véritable relation entre les tensions de détection provenant des bobines qui s'avoisinent.

La présente invention a donc pour objet une table à numériser avec couplage électromagnétique qui surmonte en très grande partie les inconvénients précités, cette table étant caracterisée en ce que le circuit de traitement comprend au moins des moyens pour combiner les signaux reçus des bobines de localisation afin de fournir des grandeurs :

$$P1x = \sum_{i=1}^{n} Vix\ f1\ (xi);$$

et

$$P2x = \sum_{i=1}^{n} Vix\ f2\ (xi)$$

i étant un nombre entier variant de 1 à n,
n étant le nombre de bobines de localisation bxi,
Vix étant l'amplitude d'un signal représentatif du signal reçu par la bobine bxi de la bobine émettrice,
xi étant la coordonnée de la position de la bobine bxi dans la table, mesurée suivant ladite première direction de la table par rapport à une origine prédéterminée,
f1 (xi) étant un premier facteur de pondération d'amplitude dont la grandeur est dépendante de xi; et
f2 (xi) étant un deuxième facteur de pondération, d'amplitude différente de la première, dont la grandeur est dépendante de xi; la coordonnée x de la position de la bobine émettrice dans la table, par rapport à ladite origine, étant donnée par :x = f3 (P1x/P2x), f(3) étant une troisième fonction.

Dans les paragraphes qui suivent, il sera décrit comment obtenir l'une des coordonnées de la bobine émettrice par rapport à la table (direction x). Bien entendu, on doit également considérer l'autre coordonnée orthogonale du plan de la table (direction y). Celle-ci étant déterminée de manière analogue à la coordonnée x, il n'en sera pas fait état outre mesure par souci de brièveté. Il suffit en effet seulement d'échanger les termes utilisés (x, xi, P1x, P2x, Lx) par les termes correspondant respectifs (y, yi, P1y, P2y, Ly) pour extrapoler les enseignements à un système à deux dimensions (x et y).

En multipliant ou en pondérant chaque amplitude Vix avec deux facteurs de pondération déterminés, au moyen de deux fonctions de pondération distinctes f1 (x) et f2 (x), et en sommant par la suite le résultat obtenu pour chacunes des fonctions de pondération, on obtient deux signaux P1x et P2x correspondant à une coordonnée de position spécifique. La pondération et la sommation peuvent être réalisés aisément par un réseau analogique, du fait que les signaux d'une bobine particulière sont toujours pondérés par le même ou les deux mêmes facteur(s) de pondération. L'utilisation d'un éventuel convertisseur analogique/numérique est ainsi limitée à la conversion des signaux P1x et P2x.

Les fonctions de pondération peuvent être choisies parmi une multiplicité de fonctions. Cependant, il est avantageux dans un mode de réalisation comprenant au moins un ensemble de bobines de localisation espacées les unes des autres dans une première direction de la table et couvrant une zone occupant au moins une partie de la dimension de la table dans cette direction, d'utiliser les fonctions :

$$f1(xi) \ = \ \cos (2 \ \pi \ xi/Lx)$$

$$f2(xi) \ = \ \sin (2 \ \pi \ xi/Lx) \ ;$$

et

$$f3(P1x/P2x) \simeq (Lx/2\pi)\arc \tan (P1x/P2x) \ ;$$

Lx étant la largeur de la zone mesurée suivant la direction x de la table. La coordonnée de position x et les deux signaux P1x et P2x deviennent alors liés entre eux par une simple fonction rationnelle.

Ainsi, la zone de la table est assimilée à un cercle et la coordonnée de la position de chaque bobine dans la zone est convertie sous forme d'un angle $2\pi xi/Lx$ par rapport à une origine prédéterminée. La contribution de chaque bobine est décomposée en deux composantes par projection sur deux axes orthogonaux. Les composantes obtenues suivant chaque axe sont cumulées, ce qui donne les grandeurs P1x et P2x représentatives de la coordonnée x de la position de la bobine émettrice.

Dans un mode de réalisation préféré de l'invention, une valeur numérique de la fonction rationnelle P1x/P2x est obtenue en une seule opération de conversion analogique/numérique en procédant par une mesure, dite "ratiométrique", de la manière suivante. On évalue d'abord chacunes des tensions représentatives de P1x et de P2x respectivement, puis on sélectionne celle ayant la plus grande valeur comme tension de référence du convertisseur analogique/numérique, de sorte que l'on obtienne directement de celui-ci une valeur numérique de la fonction rationnelle, l'autre des deux tensions étant alors fournie comme signal d'entrée analogique. Plus précisément, la sortie du convertisseur sera égale au rapport de la tension du signal d'entrée analogique à la tension de référence, et donc fonction de la valeur P1x/P2x. S'il s'avère que c'est la valeur P2x qui est la plus faible, faisant que la sortie de convertisseur soit alors fonction de P2x/P1x, il est néanmoins aisé d'extraire la valeur de x recherchée si on utilise notamment la fonction x = Lx/2$\pi$arc tan (P1x/P2x), à l'aide de l'identité trigonométrique Arc tan (P1x/P2x) = $\pi$/2 - Arc tan (P2x/P1x).

Ainsi, un mode de réalisation préféré de la présente invention prévoit également :
- un réseau analogique pour déterminer les signaux P1x et P2x;
- un circuit établissant lequel des signaux P1x et P2x a la plus forte valeur;
- un convertisseur analogique/numérique ayant une entrée de tension de référence (Pref) et une entrée de signal analogique (Pin) destiné à être converti en valeur numérique relative à ladite tension de référence;
- un premier dispositif de commutation coopérant avec ledit circuit de manière à appliquer à l'entrée de référence (Pref) du convertisseur analogique/numérique le signal (P1x ou P2x) ayant la plus grande valeur;
- un deuxième dispositif de commutation coopérant avec ledit circuit de manière à appliquer à l'entrée de signal (Pin) du convertisseur analogique/numérique le signal (P2x ou P1x) ayant la plus faible valeur; et
- un calculateur pour déterminer, à partir de la sortie dudit convertisseur analogique/numérique, la valeur x = (Lx/2$\pi$) arc tan (Pin/Pref) ou x = $\pi$/2 - (Lx/2$\pi$) arc tan(Pin/Pref).

Cette approche du problème se distingue clairement de la méthode classique pour obtenir une valeur numérique de l'amplitude des deux signaux P1x et P2x, et qui consiste à convertir successivement ces deux signaux au moyen d'un convertisseur analogique/numérique, et ensuite à calculer le rapport entre eux à l'aide d'un microprocesseur.

Avec cette dernière méthode, la précision de la conversion est maximale lorsque l'amplitude de l'un des deux signaux est égale à l'amplitude du signal de référence du convertisseur analogique/numérique. Or, comme il n'est pas possible, dans la pratique, de maintenir l'amplitude du signal le plus important à une valeur prédéterminée, il s'avère que la conversion n'est quasiment jamais obtenue avec la meilleure précision. En contraste, l'utilisation de l'un des signaux P1x ou P2x comme signal de référence, selon un mode préféré de l'invention, permet d'assurer que la conversion s'effectue toujours au point de fonctionnement optimal du convertisseur.

En particulier, elle permet d'obtenir une conversion libre de tous les paramètres qui agissent sur l'amplitude des deux signaux P1x et P2x, tels que la variation de tension d'alimentation de l'oscillateur du curseur, la variation de distance entre le curseur et la plage de numérisation, la variation de gain des circuits amplificateurs, etc. Il en résulte que la conversion s'effectue avec la précision maximale quelle que soit l'amplitude des signaux P1x et P2x.

Par ailleurs, la valeur convertie étant directement fonction du rapport des amplitudes des deux signaux P1x et P2x, il n'est plus nécessaire d'utiliser un microprocesseur pour calculer ce rapport numériquement, d'où un gain de temps dans le calcul.

On notera également qu'avec ce mode de réalisation, on fait appel à une tension de référence indépendante des signaux P1x et P2x à l'entrée du convertisseur analogique/numérique uniquement pour déterminer lequel a la plus grande amplitude. De la sorte, il n'est pas nécessaire de prévoir une source de tension de référence de grande précision. En effet, un pont diviseur utilisant deux résistances suffit, d'où une économie de fabrication.

Enfin, il est constaté que puisque le convertisseur analogique/numérique fonctionne constamment à son niveau optimal, il est possible d'utiliser un dispositif de plus faible résolution - donc de coût inférieur - tout en ayant une précision égale à celle de la méthode classique d'obtention d'une valeur numérique de l'amplitude du signal égale à P1x/P2x.

Par ailleurs, l'utilisation d'un signal de référence de phase du signal dans la bobine émettrice permet une détection synchrone, ce qui améliore le rapport signal à bruit.

Ainsi un mode de réalisation préféré de la présente invention concerne également des moyens de détection synchrones utilisant un signal de référence de phase du signal de la bobine émettrice, caractérisée en ce que l'ensemble de bobines de localisation est constitué de deux sous-ensembles comprenant un même nombre de bobines, un premier sous-ensemble couvrant une première partie de la table et le deuxième sous-ensemble couvrant la deuxième partie de la table, et en ce que chaque bobine du premier sous-ensemble, occupant une position dans la première partie de la table et ayant un premier sens de bobinage, est connectée en série avec une bobine du deuxième sous-ensemble occupant la même position dans la deuxième partie de la table et ayant un sens de bobinage inverse du premier.

Une méthode simple de sommation des tensions de détection selon la présente invention peut consister à utiliser l'inversion de phase de tensions de détection induites. Le nombre de multiplications est alors réduit par un facteur de deux. A titre d'exemple, la valeur de P1x sera donnée par l'expression :

$$P1x = \sum_{i=n}^{i=n/2} Vix - V(i + n/2) \times \cos(2\pi\, xi/Lx)$$

Dans un mode de réalisation de la présente invention, la table est configurée de manière que, pour au moins une direction, la table comprend des deuxièmes bobines qui partagent la table en plusieurs zones successives de même dimension suivant ladite direction, et des premières bobines qui partagent chaque zone et forment un motif répétitif le long de ladite direction avec un pas égal à ladite dimension des zones, les premières bobines occupant des mêmes positions dans les différentes zones étant connectées en série, de sorte que la position de la bobine émettrice par rapport à la table dans ladite direction est déterminée au moyen du circuit de traitement par identification de la zone de la table où se trouve la bobine émettrice, au moyen de signaux reçus des deuxièmes bobines de localisation, et par localisation de la bobine émettrice dans cette zone, au moyen des signaux reçus des premières bobines de localisation.

Cette disposition permet de réduire de moitié le nombre de connexions entre les bobines de localisation et le circuit de traitement. La connexion en série de deux bobines ayant même position repectivement dans la première et la deuxième moitié de la zone et ayant des sens de bobinage opposés permet d'effectuer directement la sommation des contributions de ces deux bobines, puisque leurs positions dans la zone ont des coordonnées qui correspondent à des angles ayant entre eux un écart de 180°.

Ce mode de réalisation est avantageux non seulement en raison du faible nombre de connexions à réaliser entre les bobines, mais également du fait que la fonction de pondération peut être limitée à un réseau analogique simple et de faible coût.

L'invention sera mieux comprise à la lecture de la description faite ci-après, à titre indicatif mais non limitatif, en référence aux dessins annexés sur lesquels :

- la figure 1 est une vue générale très schématique de l'ensemble des bobines d'une table à numériser à couplage électromagnétique conforme à l'invention,
- la figure 2A est un schéma montrant les circuits contenus dans le curseur de la table de la figure 1,

- la figure 2B illustre une forme d'onde du courant alimentant la bobine émettrice du curseur de la figure 2A,
- la figure 3 est un schéma fonctionnel général du circuit de traitement de la table de la figure 1,
- la figure 4 est un schéma plus détaillé montrant un mode de réalisation du circuit d'extraction d'horloge faisant partie du circuit de traitement de la figure 3,
- les figures 5 à 7 illustrent différentes positions de bobines de localisation partageant la table en plusieurs zones, suivant une direction de la table,
- la figure 8 est une courbe illustrant la variation du flux dans une bobine de localisation de zone en fonction de la position du curseur de la table à numériser,
- les figures 9 et 10 sont des schémas de deux modes de réalisation du circuit d'identification de zones faisant partie du circuit de traitement de la figure 3 et permettant d'identifier la zone où se trouve le curseur de la table, à partir des signaux reçus des bobines de localisation dont les dispositions sont illustrées par les figures 6 et 7, respectivement,
- la figure 11 illustre une disposition de bobines de localisation couvrant une zone de la table, suivant une direction de celle-ci,
- la figure 12 montre des courbes illustrant la variation du flux dans les bobines de localisation occupant une zone de la table avec la disposition de la figure 11, en fonction de la position du curseur dans cette zone,
- la figure 13 est un schéma du circuit de localisation faisant partie du circuit de traitement illustré par la figure 3 et recevant les signaux des bobines de localisation dont la disposition est illustrée par la figure 11,
- la figure 14 est un organigramme présentant les étapes du calcul d'une coordonnée à partir d'une mesure dite "ratiométrique", et
- la figure 15 est un schéma de circuit de calcul de coordonnée par une mesure dite "ratiométrique".

Une table à numériser conforme à l'invention comprend, de façon classique, des bobines de localisation constituant une trame et logées dans un support plan formant une tablette, par exemple rectangulaire, et une bobine émettrice logée dans un curseur mobile sur toute la surface de la tablette.

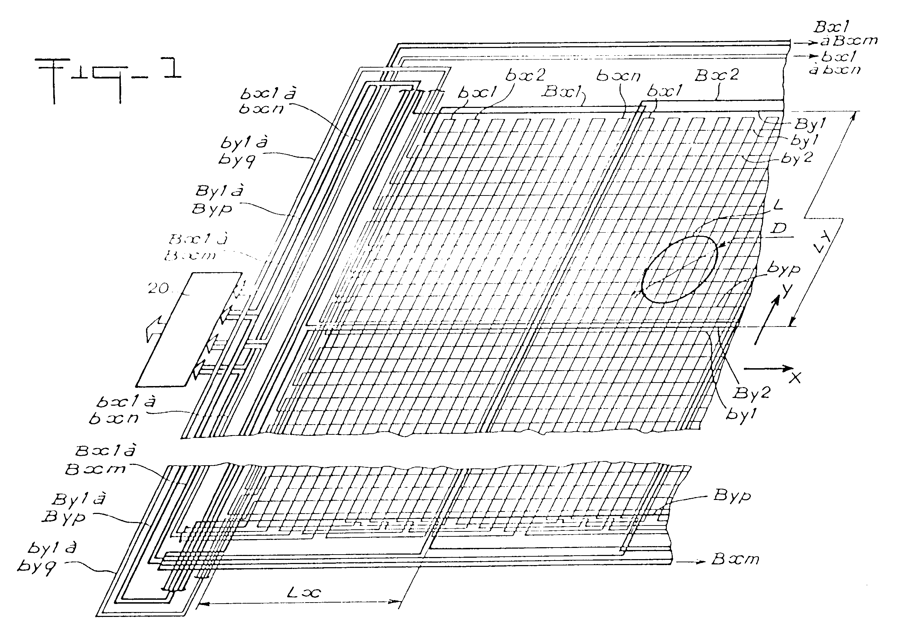

La figure 1 illustre une disposition particulière des bobines de localisation. Les bobines de localisation sont réparties en deux groupes. Un premier groupe est utilisé pour déterminer la position de la bobine émettrice suivant une première direction (X) de la table. Le deuxième groupe est utilisé pour déterminer la position de la bobine suivant une deuxième direction (Y) de la table différente de la première. Les directions X et Y sont par exemple orthogonales et parallèles aux côtés de la tablette.

Dans chaque groupe, les bobines de localisation sont réparties en deux ensembles. Ainsi, le groupe de bobines de localisation utilisées pour déterminer la position de la bobine émettrice suivant la direction X comprend un premier ensemble de bobines Bx1 à Bxm qui partagent la table en zones successives contiguës de même largeur Lx et un deuxième ensemble de bobines bx1 à bxm qui partagent chaque zone dans la direction X et forment un motif répétitif avec un pas égal à la largeur d'une zone. Dans le deuxième ensemble de bobines bx1 à bxm, les bobines occupant une même position dans chaque zone sont connectées en série. Comme le montre la figure 1, les bobines Bx1 à Bxm et bx1 à bxn forment des spires rectangulaires qui s'étendent en direction Y et dont la longueur est sensiblement égale à la dimension de la table en direction Y. Les bobines bx1 à bxn partagent chaque zone de façon régulière. Dans l'exemple illustré, les bobines bx1 à bxn forment des spires régulièrement espacées d'un intervalle égal à leur largeur.

Le groupe de bobines de localisation utilisées pour déterminer la position de la bobine émettrice suivant la direction Y comprend un premier ensemble de bobines By1 à Byp qui partagent la table en zones successives contiguës de même largeur Ly et un deuxième ensemble de bobines by1 à byq qui partagent chaque zone dans la direction Y. Les dispositions des bobines By1 à Byp et by1 à byq le long de la direction Y sont analogues à celles des bobines Bx1 à Bxm et bx1 à bxn le long de la direction X.

La bobine émettrice L logée dans le curseur mobile par rapport à la tablette a un diamètre D au moins égal au pas des bobines bx1 à bxn et des bobines by1 à byq. De préférence, comme dans l'exemple illustré, le diamètre D est choisi pour que la bobine émettrice couvre, quelle que soit sa position sur la tablette, deux des bobines bx1 à bxn et deux des bobines by1 à byq.

Les signaux induits dans les bobines de localisation par la bobine émettrice L lorsque celle-ci est alimentée en courant alternatif sont recueillis par un circuit de traitement 20 pour permettre le calcul des coordonnées de position de la bobine émettrice, donc du curseur, suivant les axes X et Y. Des modes particuliers d'agencement des bobines de localisation et de réalisation du circuit de traitement seront décrits plus loin de façon détaillée.

Selon une caractéristique de l'invention, la liaison entre le curseur et le reste des éléments de la table à numériser est réalisée sans fil.

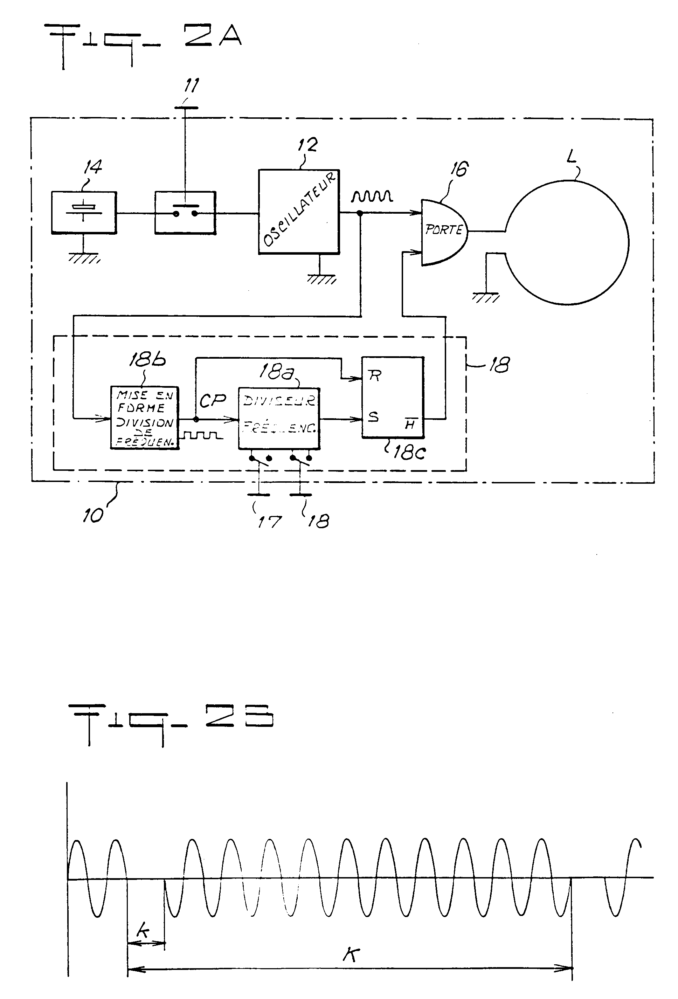

A cet effet, comme montré par la figure 2A, le curseur 10 comprend, dans un même boîtier, la bobine L, un oscillateur local 12 fournissant le courant alternatif alimentant la bobine L, et une source d'alimentation électrique autonome 14 alimentant l'oscillateur ainsi que les autres circuits actifs du curseur.

La table à numériser peut être utilisée pour effectuer une recopie de document ou un suivi de curseur sur un écran.

Dans le premier cas (mode "recopie"), l'émission est activée par fermeture d'un interrupteur 11 interposé entre l'alimentation 14 et l'oscillateur 12. Afin de réduire la consommation, l'émission est automatiquement interrompue au bout d'une période prédéterminée suivant le relâchement de l'interrupteur 11. L'oscillateur 12 fournit alors à la bobine L un train continu d'ondes sinusoïdales à travers une porte analogique 16.

Dans le deuxième cas, l'utilisateur actionne une touche particulière pour positionner le système en mode "curseur" et déplace le curseur sur la tablette jusqu'à atteindre une position désirée à l'écran ; l'utilisateur produit alors une commande par actionnement d'une touche particulière (mode "réveil").

Les modes "curseur" et "réveil" sont différenciés du mode "recopie" par modulation du courant alimentant la bobine L. Cette modulation est par exemple une modulation d'amplitude par tout ou rien réalisée au moyen d'un circuit logique 18 qui commande la porte 16 interposée entre l'oscillateur 12 et la bobine L. En réponse à l'actionnement de la touche "curseur" 17, le circuit 18 produit des impulsions de durée k et de période K qui sont appliquées à une entrée de commande de la porte 16, pour interrompre le train d'ondes produit par l'oscillateur 12 de façon périodique pendant une durée prédéterminée, comme montré par la figure 2B. Il en est de façon semblable en réponse à l'actionnement de la touche "réveil" 19, la discrimination entre les touches 17 et 19 étant réalisée en modifiant la période K et/ou la durée k des interruptions.

Le circuit 18 comprend par exemple un diviseur de fréquence ajustable 18a qui reçoit un signal d'horloge rectangulaire CI dérivé de l'oscillateur 12 par l'intermédiaire d'un circuit 18b de mise en forme et de division de fréquence. Une bascule 18c reçoit les signaux de sortie du diviseur de fréquence 18a et le signal d'horloge CI pour fournir les impulsions de commande de fermeture de la porte 16. La durée k de ces impulsions est celle des impulsions formant le signal d'horloge CI et leur période K est déterminée par ajustement du diviseur de fréquence 18a au moyen de la touche 17 ou de la touche 18.

La figure 3 illustre de façon très générale le circuit de localisation.

Pour chacune des directions X ou Y, les signaux produits par le premier ensemble de bobines de localisation Bx1 à Bxm ou By1 à Byp sont utilisés pour déterminer la zone de la table dans laquelle se trouve le curseur avec la bobine émettrice L, et effectuer ainsi une localisation grossière, et les signaux produits par le deuxième ensemble de bobines de localisation bx1 à bxn ou by1 à byq sont utilisés pour déterminer la position précise du curseur à l'intérieur de la zone déterminée, et effectuer ainsi une localisation fine.

Les signaux reçus des bobines Bx1 à Bxm sont amplifiés au moyens de circuits amplificateurs 22x. Des circuits de détection 24x reçoivent les signaux de sortie des circuits amplificateurs pour fournir à une unité de traitement 30 des informations d'amplitude et de signe relatives aux signaux des bobines Bx1 à Bxm. De façon similaire, des circuits d'amplification 22y et de détection 24y sont interposés entre les bobines By1 à Byp et l'unité de traitement 30.

Les signaux reçus des bobines bx1 à bxn sont amplifiés et combinés au moyen de circuits 32x, 34x dont les sorties sont connectées à un circuit de détection et de conversion 40. De même, les signaux reçus des bobines by1 à byq sont amplifiés et combinés au moyen de circuits 32y et 34y dont les sorties sont connectées au circuit 40. Ce dernier fournit à l'unité de traitement 30 des informations numériques destinées au calcul de la position du curseur dans une zone de la table.

Le traitement des signaux issus des bobines de localisation sera expliqué plus loin de façon détaillée. Ce traitement utilise notamment le principe de la détection synchrone. A cet effet, les signaux issus des bobines de localisation, ou des combinaisons linéaires de ceux-ci, sont multipliés de façon analogique avec un signal d'horloge rectangulaire H en phase avec le courant alimentant la bobine émettrice.

L'absence de liaison par fil entre le curseur et le circuit de traitement de la table à numériser fait qu'il est nécessaire d'extraire le signal d'horloge des signaux reçus des bobines de localisation.

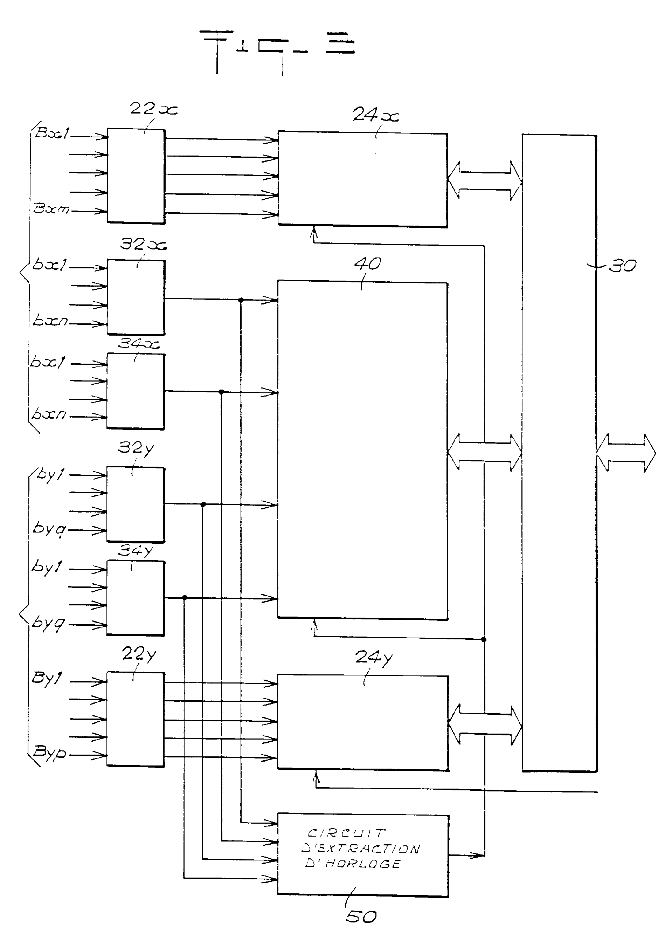

A cet effet, les signaux de sortie des circuits 32x, 34x, 32y et 34y sont apliqués à un circuit de détection de maximum 52 faisant partie d'un circuit d'extraction d'horloge 50 (figure 4). Le circuit 52 sélectionne, parmi les signaux qu'il reçoit, celui ayant la plus grande amplitude et applique ce dernier à un circuit redresseur double alternance 54. Le signal redressé est transformé en impulsions au moyen d'un circuit de détection de seuil 56 dont la sortie est à l'état haut lorsque l'amplitude du signal sur son entrée est en-dessous d'un seuil prédéterminé. Les impulsions produites par le circuit 56 sont transformées en un signal carré par une bascule 58 dont la sortie attaque une boucle à verrouillage de phase 60. Le signal redressé en sortie du circuit redresseur 54 fournit une fréquence de référence double de celle du courant alimentant la bobine émettrice. Cette fréquence est divisée par 2 par la bascule 58 de sorte que la boucle à verrouillage de phase 60 fournit le signal d'horloge H en phase avec le courant alimentant la bobine L. Le signal H est appliqué aux circuits 24x, 24y et 40 dans lesquels sont réalisées des détections synchrones.

Dans l'exemple illustré, le circuit d'extraction d'horloge 50 reçoit des signaux constitués par des combinaisons particulières de signaux fournis par certaines bobines de localisation. Bien entendu, l'extraction du signal d'horloge H pourra être réalisée à partir de tous signaux tels que ceux directement reçus des bobines de localisation ou des combinaisons linéaires de ceux-ci.

Dans tous les cas, le circuit d'extraction d'horloge reçoit avantageusement plusieurs signaux de façon simultanée pour sélectionner celui de plus forte amplitude. On évite ainsi un décrochage de la boucle de verrouillage de phase qui pourrait se produire, si un seul signal provenant des bobines de localisation était utilisé, lorsque ce signal présente une amplitude nulle ou quasi-nulle.

Comme le montre encore la figure 4, le signal de sortie du circuit 52 de détection de maximum est également appliqué à un circuit 62 de détection d'interruption qui fournit à un compteur 64 un signal de remise à zéro en réponse à chaque interruption. Le compteur 64 reçoit le signal d'horloge H sur son entrée de comptage. Le signal de sortie du circuit de détection d'interruption commande le chargement du contenu du compteur 64 dans un registre 66, immédiatement avant remise à zéro du compteur. Le contenu du registre 66, qui est représentatif de la période des interruptions du signal produit par la bobine émettrice, est transmis à l'unité de traitement 30 pour déterminer lequel des boutons du curseur a éventuellement été actionné.

La disposition des bobines de localisation Bx1 à Bxm et By1 à Byp est choisie de manière à réduire autant que possible le nombre de connexions, sans altérer les performances du système de localisation.

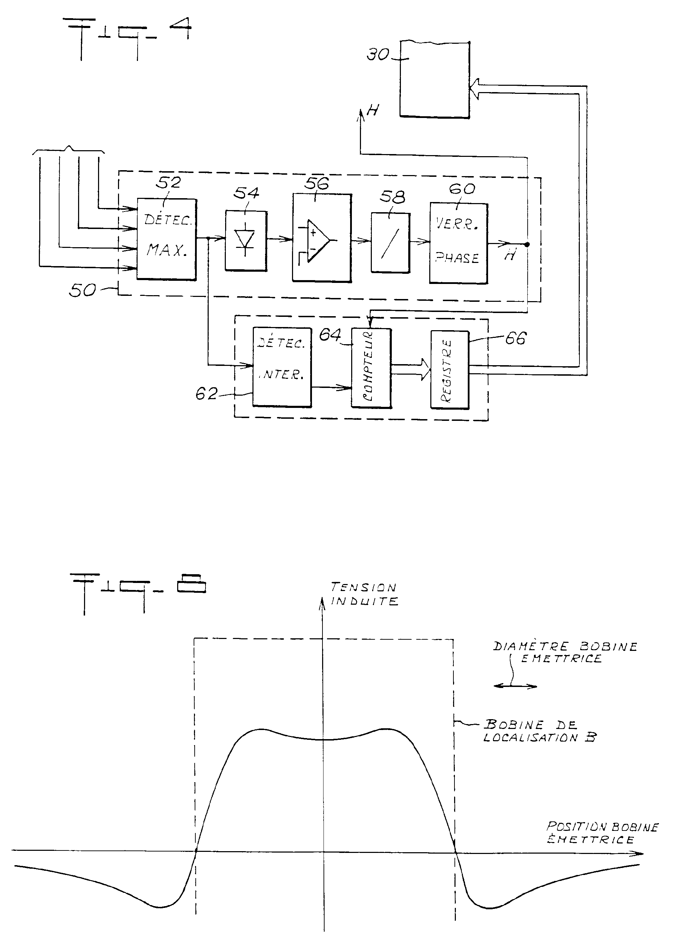

A cet effet, on peut utiliser des bobines ayant une largeur correspondant à la longueur des zones qu'elles définissent en connectant en série une bobine définissant une zone de la table et ayant un premier sens de bobinage avec une bobine définissant une autre zone de la table et ayant un sens de bobinage inverse du premier. Une telle disposition est illustrée schématiquement par la figure 5 pour les bobines Bx1 à Bxm, lesquelles définissent 8 zones (m étant égal à 8 dans l'exemple illustré).

Deux bobines connectées en série avec des sens de bobinage opposés ne doivent pas être contigues sous peine de créer une zone où le flux s'annule et où il devient impossible de repérer la position de la bobine émettrice.

La figure 8 montre la variation de la tension induite dans une bobine de localisation B en fonction de la position du centre de la bobine émettrice par rapport à la bobine de localisation B (schématisée par des tirets). Lorsque le centre de la bobine émettrice sort de la bobine de localisation B et s'éloigne de celle-ci, la tension induite s'inverse puis tend vers zéro.

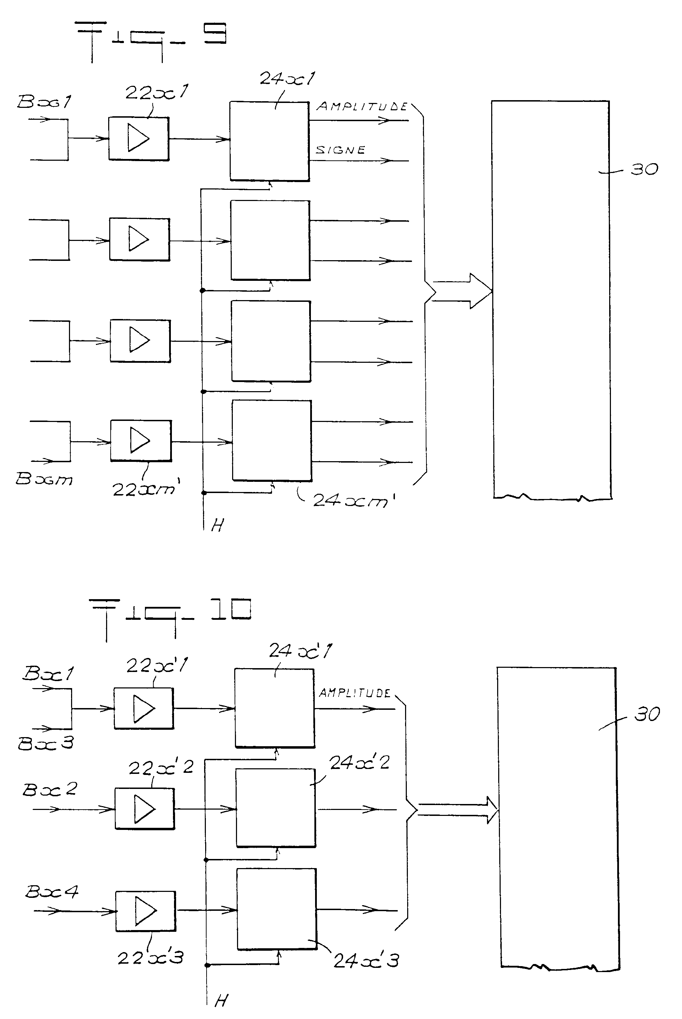

L'identification de la zone de la table où se trouve la bobine émettrice, dans la direction Y, est effectuée par détection synchrone sur les signaux produits par les bobines de localisation Bx1 à Bxm et amplifiés par les circuits amplificateurs 22x1 à 22xm', respectivement (figure 9). Les bobines Bx1 à Bxm étant connectées en série deux par deux, m' est ici égal à m/2. La détection synchrone consiste à multiplier les signaux par le signal d'horloge H en phase avec le courant alimentant la bobine émettrice L. Cette détection est effectuée au moyen de circuits détecteurs à seuil 24x1 à 24xm' connectés aux sorties des amplificateurs 22x1 à 22xm', respectivement, et recevant le signal d'horloge H.

Le repérage de position de la bobine émettrice se fait, d'une part, par détection de la présence d'un signal induit dont l'amplitude, en valeur absolue, dépasse un seuil prédéterminé et, d'autre part, par détection du signe du signal induit. On notera à ce propos que l'information de signe peut être obtenue en raison de la présence de détecteurs synchrones sensibles au fait que le signal induit est en phase ou en opposition de phase avec le signal d'horloge H.

L'information concernant la paire de bobines de localisation connectées en série où le signal induit ayant la plus forte amplitude a été détecté et l'information de signe sont transmises à l'unité de traitement 30, ce qui permet d'identifier la zone de la table où se trouve la bobine émettrice L, dans la direction X.

Les signaux des bobines By1 à Byp sont traités de la même façon au moyen des amplificateurs 22y et des détecteurs à seuil 24y pour identifier la zone de la table où se trouve la bobine émettrice L, dans la direction Y.

L'inversion de polarité de la tension induite dans une bobine de localisation B par la bobine émettrice L, lorsque celle-ci sort de la bobine de localisation B (figure 8) peut conduire à l'apparition de zones fantômes dans la mesure où, après inversion de sa polarité, la tension induite atteint une valeur dont l'amplitude dépasse le seuil de détection. En effet, dans un tel cas, l'information est interprétée comme signifiant que la bobine émettrice se trouve au niveau de la bobine de localisation connectée en série avec la bobine de localisation B et ayant un sens de bobinage inverse.

Pour éviter ce phénomène, on peut choisir un seuil de détection plus grand, puisque le niveau du signal inverse induit au voisinage externe d'une bobine de localisation est inférieur au signal induit à l'intérieur de la bobine.

Un autre moyen d'éviter l'apparition de zones fantômes consiste à permuter l'ordre des bobines ayant un sens de bobinage inverse par rapport à celui des bobines ayant un sens de bobinage direct, de façon à garantir que deux bobines de localisation voisines avec un sens de bobinage direct ne sont pas reliées en série respectivement avec deux bobines de localisation voisines avec un sens de bobinage inverse. Une telle disposition est illustrée par la figure 6. Dans cet exemple, les bobines de localisation sont au nombre de 8, les bobines Bx1, Bx2, Bx3, Bx4 et Bx5 ayant un sens de bobinage direct et les bobines Bx6, Bx7 et Bx8 ayant un sens de bobinage inverse et étant connectées en série avec les bobines Bx1, Bx3 et Bx5, respectivement. Une disposition analogue peut être prévue pour les bobines By1 à Byp.

Les signaux issus des bobines Bx1 à Bx8 sont traités par un circuit analogue à celui de la figure 9, le nombre de circuits amplificateurs et de circuits de détection étant égal à 5.

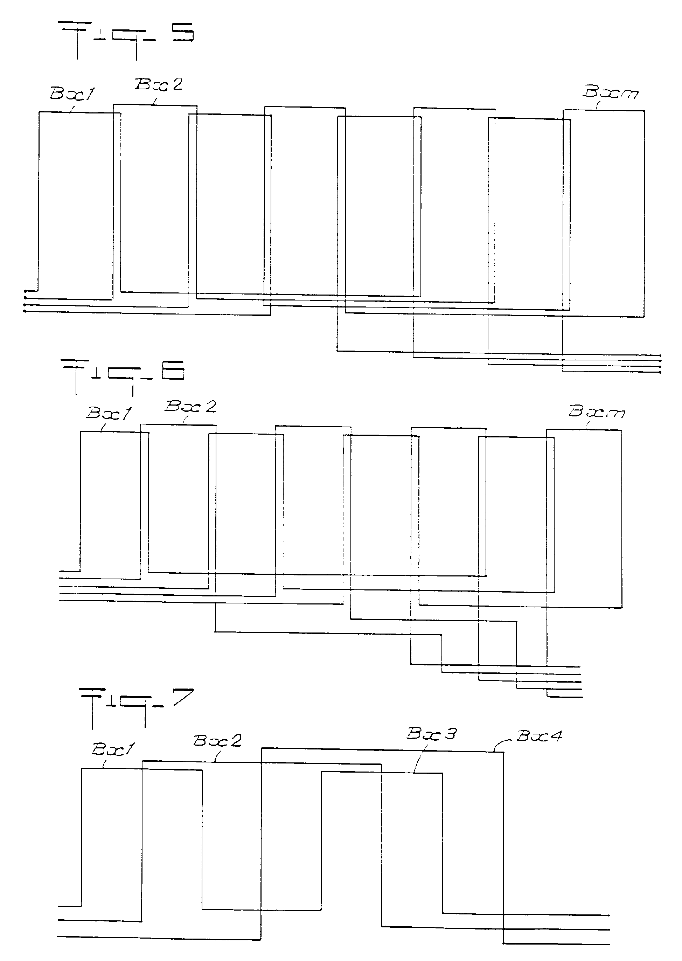

Une réduction du nombre de connexions peut encore être obtenue avec une disposition de bobines de localisation telle qu'illustrée par la figure 7.

Les bobines Bx1 à Bxm ont dans ce cas des largeurs, mesurées dans la direction X, qui ne sont pas toutes égales et qui sont multiples de la longueur Lx des zones de la table qu'elles définissent. Les bobines de localisation Bx1 à Bxn sont entrelacées de sorte qu'au moins certaines des zones de la table sont incluses dans plusieurs bobines de localisation.

Dans l'exemple illustré, les bobines Bx1 à Bxm sont au nombre de quatre et définissent huit zones en direction X. Les signaux fournis par les bobines de localisation constituent un codage de la position de la bobine émettrice. Le code utilisé est par exemple un code Gray avec deux bobines Bx1 et Bx3 connectées en série et couvrant respectivement les 1ère, 2e et 5e, 6e zones, une bobine Bx2 couvrant les 2e, 3e, 4e et 5e zones et une bobine Bx4 couvrant les 4e, 5e, 6e et 7e zones. Une disposition analogue peut être adoptée pour les bobines By1 à Byp.

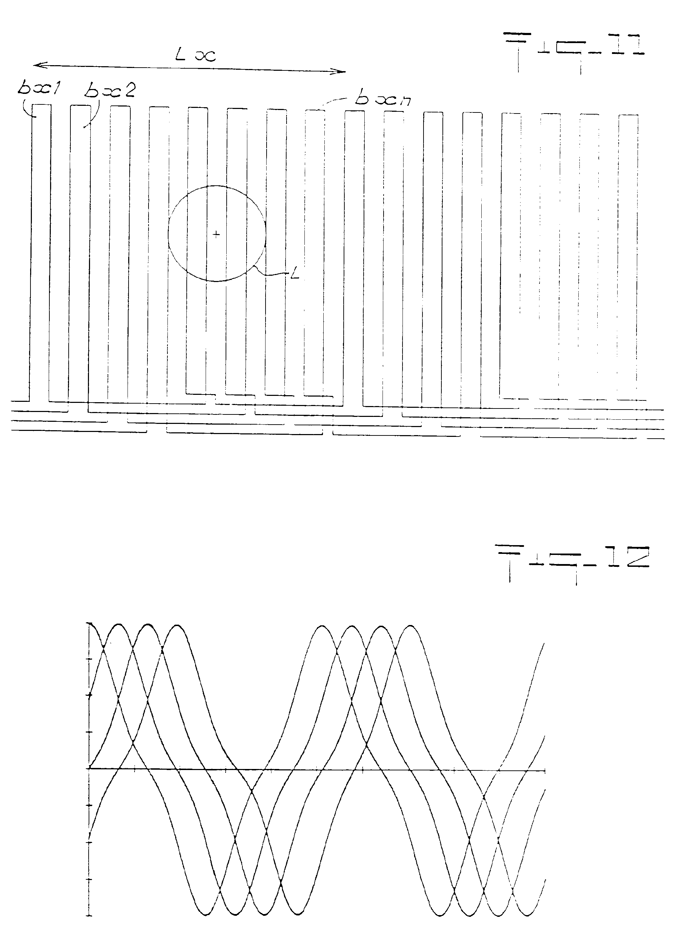

Le traitement des signaux issus des bobines Bx1 à Bx4 est effectué par le circuit de la figure 10. La somme des signaux des bobines Bx1 et Bx3 est amplifiée par un circuit amplificateur 22x'1 tandis que les signaux des bobines Bx2 et Bx4 sont amplifiés par des circuits amplificateurs 22x'2 et 22x'3. Des circuits détecteurs à seuil 24x'1 à 24x'3 reçoivent les signaux de sortie des circuits amplificateurs 22x'1 à 22x'3, respectivement, ainsi que le signal d'horloge H, afin d'effectuer une détection synchrone.

Les signaux de sortie des circuits détecteurs à seuil 24x'1 à 24x'3 sont transmis sous forme binaire à l'unité de traitement 30, leur combinaison constituant le code d'identification de la zone de la table où se trouve la bobine émettrice.

Comme pour les bobines de localisation de zone Bx1 à Bxm et By1 à Byp, les dispositions des bobines bx1 à bxn et by1 à byq sont choisies de manière à diminuer le nombre de connexions avec les moyens de traitement. A titre d'exemple, les bobines bx1 à bxn sont disposées comme illustré par la figure 11. Une disposition semblable peut être adoptée pour les bobines by1 à byq.

Dans cet exemple, les bobines bx1 à bxn sont au nombre de huit (n = 8) régulièrement réparties sur la largeur Lx d'une zone de la table en direction X. Les bobines bx1 à bx8 sont mutuellement espacées d'un intervalle constant égal à leur largeur. Comme pour les bobines de localisation de zone, le nombre de connexions avec le système de traitement est réduit en connectant les bobines en série deux par deux avec des sens de bobinage opposés. Ainsi, chaque bobine bx1 à bx4 située dans la première moitié de la zone de la table et ayant un premier sens de bobinage est connectée en série avec la bobine bx5 à bx8 qui occupe la même position dans la deuxième moitié de la zone et a un sens de bobinage opposé, au premier. Le motif formé par les bobines bx1 à bx8 dans une zone est répété dans chacune des autres zones, toutes les bobines occupant une même position dans les différentes zones étant connectées en série.

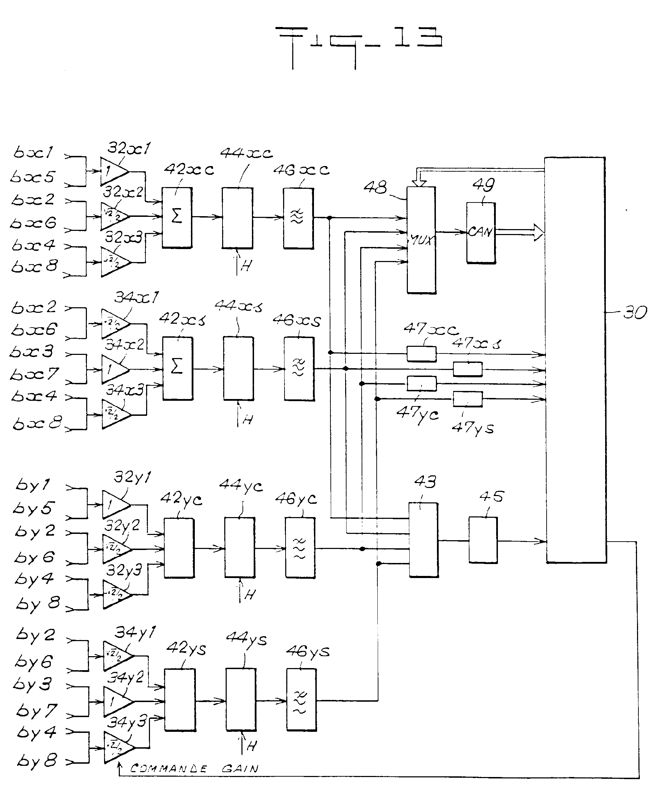

La figure 12 illustre la variation de la tension recueillie aux bornes des quatre paires de bobines bx1-bx5, bx2-bx6, bx3-bx7 et bx4-bx8 en fonction de la position de la bobine émettrice dans la zone.

La détermination de la position précise de la bobine émettrice dans une zone de la table suivant la direction X est effectuée par interpolation, en combinant les tensions $bi_x$ fournies par les bobines bxi. A cet effet, une zone de la table est assimilée à un cercle complet et la position d'une bobine de localisation est transformée en coordonnée polaire $2\pi \dfrac{x_i}{Lx}$ où $x_i$ est la coordonnée de la position de la bobine bxi, mesurée suivant la direction X par rapport à une origine prédéterminée. Les tensions $bi_x$ sont projetées sur deux axes perpendiculaires et les composantes ainsi obtenues sont sommées, ce qui donne :

$$Pcx = \sum_i bi_x \cos\left(2\pi \frac{x_i}{Lx}\right),$$

et

$$Psx = \sum_i b_{ix} \sin \left(2\pi \frac{x_i}{Lx}\right),$$

Les grandeurs Pcx et Psx sont les cosinus et sinus de l'angle représentant la coordonnée polaire de la bobine émettrice dans la zone de la table. La coordonnée linéaire x représentant la position de la bobine émettrice suivant la direction X par rapport à l'origine prédéterminée est donc donnée par :

$$x = \frac{Lx}{2\pi} \, \text{Arctg} \, (Psx/Pcx)$$

La figure 13 illustre un mode de réalisation des circuits de traitement des signaux des bobines bxi lorsque celles-ci ont la disposition montrée sur la figure 11.

En prenant comme origine le milieu de la bobine bx1, les grandeurs Pcx et Psx définies plus haut s'expriment par :

$$Pcx = b1_x \cos 0 + b2_x \cos \frac{\pi}{4} + b3_x \cos \frac{\pi}{2} + b4_x \cos \frac{3\pi}{4}$$
$$+ b5_x \cos \pi + b6_x \cos \frac{5\pi}{2} + b7_x \cos \frac{3\pi}{2} + b8_x \cos \frac{7\pi}{4}$$

$$Psx = b1_x \sin 0 + b2_x \sin \frac{\pi}{4} + b3_x \sin \frac{\pi}{2} + b4_x \sin \frac{3\pi}{4}$$
$$+ b5_x \sin \pi + b6_x \sin \frac{5\pi}{4} + b7_x \sin \frac{3\pi}{2} + b8_x \sin \frac{7\pi}{4}$$

c'est-à-dire :

$$Pcx = (b1_x - b5_x) + \left(\frac{\sqrt{2}}{2}(b2_x - b6_x) - \frac{\sqrt{2}}{2}(b4_x - b8_x)\right.$$

$$Psx = \frac{\sqrt{2}}{2}(b2_x - b6_x) + (b3_x - b7_x) + \frac{\sqrt{2}}{2}(b4_x - b8_x)$$

Les tensions $(b1_x - b5_x)$, $(b2_x - b6_x)$, $(b3_x - b7_x)$ et $(b4_x - b8_x)$ sont obtenues par mises en série des bobines bx1 et bx5, bx2 et bx6, bx3 et bx7, et bx4 et bx8, avec des sens de bobinage opposés. Des circuits amplificateurs 32x1, 32x2 et 32x3 reçoivent les tensions $(b1_x - b5_x)$, $(b2_x - b6_x)$ et $(b4_x - b8_x)$ pour fournir des signaux respectivement proportionnels à $(b1_x - b5_x)$, $\underline{2}(b2_x - b6_x)$ et $-\underline{2}(b4_x - b8_x)$.

De la même façon, des circuits amplificateurs 34x1, 34x2 et 34x3 reçoivent les tensions $(b2_x - b6_x)$, $(b3_x - b7_x)$ et $(b4_x - b8_x)$ pour fournir des signaux respectivement proportionnels à $\frac{\sqrt{2}}{2}(b2_x - b6_x)$, $(b3_x - b7_x)$ et $\frac{\sqrt{2}}{2}(b4_x - b8_x)$

Un circuit sommateur 42xc reçoit les sorties des circuits amplificateurs 32x1, 32x2 et 32x3 pour élaborer un signal représentatif de la grandeur Pcx. Le signal de sortie du circuit 42xc est appliqué à un circuit de détection synchrone 44xc, qui reçoit l'horloge H, et dont la sortie est reliée à une première entrée d'un multiplexeur 48, par l'intermédiaire d'un filtre passe-bas 46xc.

De même, un circuit sommateur 42xs élabore un signal représentatif de la grandeur Psx à partir des signaux de sortie des amplificateurs 34x1, 34x2 et 34x3. Un circuit de détection synchrone 44xs, recevant le signal d'horloge H, est relié à la sortie du circuit sommateur 42xs et a sa sortie reliée à une deuxième entrée du multiplexeur 48, par l'intermédiaire d'un filtre passe-bas 46xs.

En supposant une disposition des bobines by1 à byq en direction Y identique à celles des bobines bx1 à bxn en direction X, le circuit de la figure 13 comprend encore des circuits amplificateurs 32y1, 32y2, 32y3 qui reçoivent les tensions $(b1_y - b5_y)$, $(b2_y - b6_y)$ et $(b4_y - b8_y)$ pour fournir, à un circuit sommateur 42yc , des signaux respectivement proportionnels à $(b1_y - b5_y)$, $\frac{\sqrt{2}}{2}(b2_y - b6_y)$ et $-\frac{\sqrt{2}}{2}(b4_y - b8_y)$, ainsi que des circuits amplificateurs 34y1, 34y2, 34y3 qui reçoivent les tensions $(b2_y - b6_y)$, $(b3_y - b7_y)$ et $(b4_y - b8_y)$ pour fournir à un circuit sommateur 42ys des signaux respectivement proportionnels à $\frac{\sqrt{2}}{2}(b2_y - b6_y)$, $(b3_y - b7_y)$ et $\frac{\sqrt{2}}{2}(b4_y - b8_y)$.

Des circuits de détection synchrone 44yc et 44ys recevant le signal d'horloge H sont reliés aux sorties des circuits sommateurs 42yc et 42ys, respectivement, pour fournir sur une troisième et une quatrième entrée du multiplexeurs 48, après passage dans des filtres passe-bas 46yc 46ys, des signaux représentatifs de grandeurs Pcy et Psy.

Le multiplexeur 48 est commandé par l'unité de traitement 30 pour relier successivement ses entrées à un convertisseur analogique/numérique 49 dont la sortie est reliée à l'unité de traitement 30.

Des détecteurs de signe 47xc, 47xs, 47yc et 47ys connectés aux sorties des filtres passe-bas déterminent les signes des signaux élaborés par détection synchrone et transmettent les valeurs de ces signes à l'unité de traitement 30. Celle-ci est programmée pour calculer les coordonnées $x = \frac{Lx}{2}$ arc tan (Psx/Pcx) et $y = \frac{Ly}{2}$ arc tan (Psy/Pcy) à partir des données reçues du convertisseur 49 et des détecteurs de signes.

Les signaux de sortie des filtres passe-bas sont encore appliqués à un détecteur de maximum 43 qui sélectionne parmi les signaux reçus celui ayant l'amplitude la plus grande et applique celui-ci à un détecteur de seuil 45. La sortie de celui-ci est reliée à l'unité de traitement 30 qui élabore en conséquence une information de commande automatique de gain des amplificateurs d'entrée.

La conversion des signaux Psx et Pcx en une valeur numérique de la coordonnée x, et la conversion des signaux Psy et Pcy en une valeur numérique de la coordonnée y peuvent être réalisées avantageusement (par exemple pour le cas de la coordonnée x) en utilisant l'un de ces signaux (Psx ou Pcx) comme tension d'entrée de référence Er d'un convertisseur analogique/numérique 100, l'autre signal (Pcx ou Psx) étant alors fourni comme tension de signal Es. On assimilera ici les signaux Psx et Pcx respectivement aux signaux P1x et P2x décrits ci-dessus. Le signal devant servir de tension de référence au convertisseur analogique/numérique 100 est celui ayant la plus grande valeur des deux signaux Psx et Pcx. Ainsi, la sortie SN du convertisseur 100 sera directement fonction de la valeur Psx/Pcx si le signal Pcx est fourni à l'entrée de tension de référence, ou de la valeur Pcx/Psx si c'est au contraire le signal Psx qui sert de tension de référence.

Il résulte que l'on obtient directement du convertisseur analogique/numérique 100 une valeur convertie qui est fonction du rapport des amplitudes des deux signaux Psx et Pcx, c'est-à-dire le résultat d'une évaluation dite "ratiométrique" de ces derniers, économisant ainsi l'utilisation d'un calculateur pour déterminer ce rapport par un moyen numérique. Il suffit alors de fournir la valeur issue du convertisseur analogique/numérique 100 au calculateur 30 comme variable pour obtenir la coordonnée x. En effet, s'il se trouve que le signal le plus fort soit Pcx, la valeur "ratiométrique" SN3 issue du convertisseur sera alors égale à Psx/Pcx, et on peut donc établir la coordonnée x à partir de la fonction trigonométrique $x = (Lx/2\pi)$ arc tan (SN3).

Dans le cas où c'est le signal Psx qui a la valeur la plus forte, le convertisseur fournira un signal de sortie SN4 = Pcx/Psx. Il sera néanmoins aisé d'obtenir la coordonnée x en faisant appel à l'identité trigonométrique; arc tan (z) = $\pi/2$ - arc tan (1/z), de manière à déterminer au moyen du calculateur 30 la coordonnée $x = \pi/2 - (Lx/2\pi)$ arc tan (SN4).

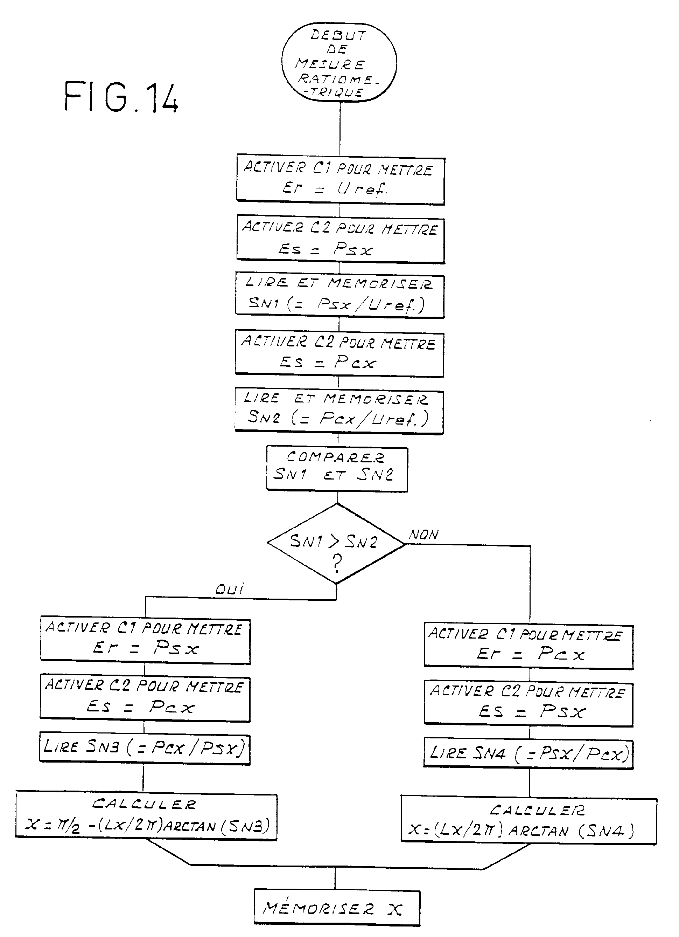

Ce calcul de la coordonnée x peut s'effectuer avantageusement sous contrôle d'un programme au niveau du calculateur 30, à partir duquel est piloté un réseau commutateur à commande électronique 110 permettant d'aiguiller sélectivement les entrées Er et Es du convertisseur analogique /numérique 100 sur différents signaux candidats, selon l'organigramme de la figure 14. Dans ce schéma, le programme utilise comme donnée la sortie numérique SN du convertisseur 100, dont la valeur est désignée SN1...SN4 selon les étapes.

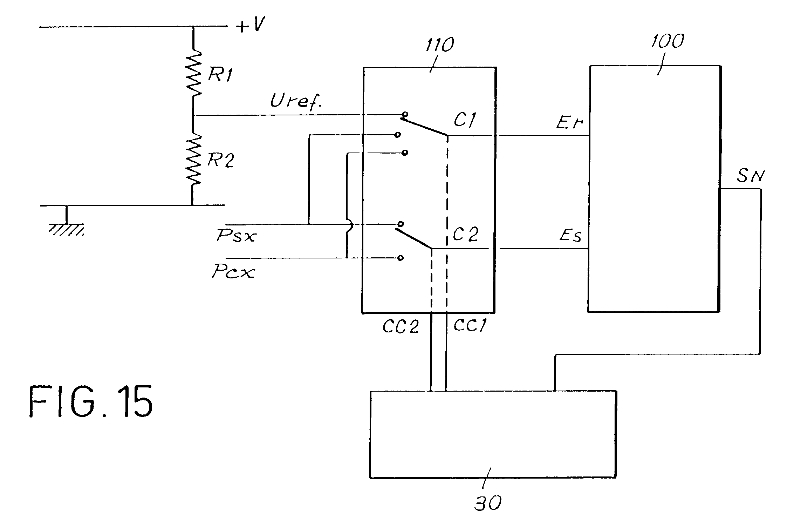

Un exemple de circuit permettant d'obtenir la coordonnée x selon ce procédé est représenté à la figure 15.

Le réseau commutateur à commande électronique 110 se décompose en deux commutateurs C1 et C2 ayant chacun un pôle relié respectivement à l'entrée de tension de référence Er et à l'entrée de tension de signal Es du convertisseur analogique/numérique 100.

Le commutateur C1 permet de relier l'entrée Er sélectivement à l'un de trois signaux Uref, Psx et Pcx selon des commandes qui lui sont envoyées depuis le calculateur 30 via un bus de commande CC1.

De manière analogue, le commutateur C2 permet de relier l'entrée Es sélectivement à l'un de deux signaux Pcx et Psx selon des commandes qui lui sont envoyées depuis le calculateur 30 via le bus de commande CC2.

La séquence de fonctionnement des commutateurs C1 et C2 durant un cycle de calcul de la coordonnée x se déroule de la manière suivante.

Dans une première étape, on détermine lequel des signaux Psx et Psy a la plus forte valeur. Le commutateur C1 est alors commandé par le calculateur 30 pour relier l'entrée Er du convertisseur 100 à la borne du signal Uref. Ce signal constitue une tension de référence indépendante des signaux Psx et Psy afin de permettre de comparer ces derniers. On notera que la valeur de Uref n'est pas critique et que sa précision ne conditionne pas le résultat du calcul de la coordonnée x. De la sorte, Uref peut être obtenu tout simplement au moyen d'un pont diviseur réalisé avec deux resistances R1 et R2 à partir d'une différence de potentiel de +V.

L'entrée Er du convertisseur 100 étant relié à la tension Uref, le commutateur C2 est commandé depuis le calculateur 30 à travers le bus de commande CC2 pour relier l'entrée de signal Es du convertisseur 100 au signal Psx. Le calculateur 30 échantillonne et mémorise la valeur numérique SN1 (égale à Psx/Uref) produite à la sortie SN du convertisseur 100. Il commande ensuite au commutateur C2 de relier l'entrée Es à l'autre signal, Pcx, et échantillonne et mémorise la valeur numérique SN2 (égale à Pcx/Uref) à la sortie SN du convertisseur 100. Le calculateur 30 procède ensuite à une comparaison des deux valeurs SN1 et SN2 et détermine laquelle d'entre elles a la plus forte valeur. Une fois cette opération effectuée, il est procédé à l'évaluation "ratiométrique" proprement dite.

Le calculateur 30 commande au commutateur C1 de relier le signal le plus fort (Psx ou Pcx) à l'entrée Er du convertisseur, et au commutateur C2 de relier l'autre signal (Pcx ou Psx) à l'entrée Es. Cette configuration permettra alors au calculateur 30 de prélever directement à partir de la sortie SN du convertisseur 100 la valeur numérique (SN3 ou SN4) du rapport des deux signaux Psx et Pcx qui se trouve être supérieur à l'unité. De ce fait, la coordonnée x peut être déterminée simplement en évaluant une fonction trigonométrique, cette coordonnée étant donnée soit par :

$x = \pi/2 - (Lx/2\pi)$ arc tan (SN3) lorsque le signal à l'entrée Er est Psx; soit par

$x = (Lx/2\pi)$ arc tan (SN4) lorsque le signal à l'entrée Er est Pcx.

L'évaluation de ces fonctions peut être obtenue aisément par commande de programmation.

Bien entendu, la coordonnée y peut être obtenue de manière identique en utilisant les valeurs Ly, Psy et Pcy respectivement à la place de valeurs Lx, Psx et Pcx.

Les coordonnées x et y de position du curseur dans une zone de la table sont combinées par le circuit de traitement 20 avec l'information identifiant la zone de la table où se trouve le curseur pour fournir sous forme numérique des informations représentant la position du curseur par rapport à la table. Les informations sont transmises à un circuit utilisateur (non représenté).

## Revendications

1. Table à numériser comprenant une table dans laquelle sont logées des bobines de localisation (bx1 à bxn, by1 à byq) constituant une trame, un curseur (10) mobile par rapport à la table et comprenant une bobine émettrice (L) alimentée par un courant alternatif, et un circuit de traitement (20) recevant des signaux induits dans les bobines de localisation par couplage électromagnétique avec la bobine émettrice et comportant des moyens de calcul (30) pour déterminer, à partir de l'amplitude des signaux des bobines de localisation (bx1 à bxn, by1 à byq), une première coordonnée (x), mesurée suivant une première direction de la table, et une deuxième coordonnée (y), mesurée suivant une deuxième direction de la table, établissant la position de la bobine émettrice par rapport à la table, caractérisée en ce que le circuit de traitement comprend au moins des moyens pour combiner les signaux reçus des bobines de localisation (bx1 à bxn) afin de fournir des grandeurs :

$$P1x = \sum_{i=1}^{i=n} Vix\ f1\ (xi);$$

et

$$P2x = \sum_{i=1}^{i=n} Vix\ f2\ (xi)$$

i étant un nombre entier variant de 1 à n;
n étant le nombre de bobines de localisation bxi
Vix étant l'amplitude d'un signal représentatif du signal reçu de la bobine bxi par la bobine émettrice;
xi étant la coordonnée de la position de la bobine bxi dans la table, mesurée suivant ladite première direction de la table par rapport à une origine prédéterminée;
f1(xi) étant un premier facteur de pondération d'amplitude dont la grandeur est dépendante de xi; et
f2(xi) étant un deuxième facteur de pondération d'amplitude, différent du premier et dont la grandeur est dépendante de xi;

la coordonnée x de la position de la bobine émettrice dans la table, par rapport a ladite origine, étant donnée par :

$$x = f3\ (P1x/P2x)$$

f3 (x) étant une relation déterminée entre autres par f1 (xi) et f2 (xi).

2. Table selon la revendication 1 comprenant au moins un ensemble de bobines de localisation (bx1 à bxn) espacées les unes des autres dans la première direction de la table et couvrant une zone occupant au moins une partie de la dimension de la table dans cette direction, caractérisée en ce que :

$$f1\ (xi) = \sin\ (2\pi xi/Lx);$$
$$f2\ (xi) = \cos\ (2\pi xi/Lx);$$

et

$$f3\ (P1x/P2x) \simeq Lx/2\pi\ \text{arc tan}\ (P1x/P2x);$$

Lx étant la largeur de ladite zone mesurée suivant ladite direction de la table.

3. Table selon la revendication 1 ou 2, caractérisée en ce qu'il comprend des moyens pour déterminer ladite première coordonnée (x), lesdits moyens comprenant :
   - un réseau analogique pour déterminer les signaux P1x et P2x;
   - un circuit établissant lequel des signaux P1x et P2x a la plus forte valeur;
   - un convertisseur analogique/numérique ayant une entrée de tension de référence (Pref) et une entrée de signal analogique (Pin) à convertir en valeur numérique relative à ladite tension de référence;
   - un premier dispositif de commutation coopérant avec ledit circuit de manière à appliquer le signal P1x ou P2x ayant la plus grande valeur à l'entrée de référence (Pref) du convertisseur analogique/numérique;
   - un deuxième dispositif de commutation coopérant avec ledit circuit de manière à appliquer le signal P2x ou P1x ayant la plus faible valeur à l'entrée de signal (Pin) du convertisseur analogique/numérique; et
   - un calculateur pour déterminer, à partir de la sortie dudit convertisseur analogique/numérique, la valeur x=(Lx/2$\pi$) arc tan (Pin/Pref) ou $\pi$/2-(Lx/2$\pi$)arc tan (Pin/Pref);

4. Table selon la revendication 2 ou 3, ayant des moyens de détection synchrone utilisant un signal (H) de référence de phase du signal de la bobine émettrice, caractérisée en ce que l'ensemble de bobines de localisation (bxi à bxn) est constitué de deux sous-ensembles comprenant un même nombre de bobines, un premier sous-ensemble couvrant une première partie de la table et le deuxième sous-ensemble couvrant une deuxième partie de la table, et en ce que chaque bobine du premier sous-ensemble, occupant une position dans la première partie de la table et ayant un premier sens de bobinage, est connectée en série avec une bobine du deuxième sous-ensemble occupant la même position dans la deuxième partie de la table et ayant un sens de bobinage inverse du premier.

5. Table selon l'une quelconque des revendications 2 à 4, caractérisée en ce que la table comprend, pour au moins la première direction de la table, des deuxièmes bobines (Bx1 à Bxm) qui partagent la table en plusieurs zones successives de même dimension (Lx/2$\pi$)suivant ladite direction, et des premières bobines (bx1 à bxn) qui partagent chaque zone et forment un motif répétitif le long de ladite direction avec un pas égal à ladite dimension des zones, les premières bobines occupant des mêmes positions dans les différentes zones étant connectées en série, de sorte que la position de la bobine émettrice (L) par rapport à la table dans ladite direction est déterminée au moyen du circuit de traitement (20) par identification de la zone de la table où se trouve la bobine émettrice, au moyen de signaux reçus des deuxièmes bobines de localisation, et par localisation de la bobine émettrice dans cette zone, au moyen des signaux reçus des premières bobines de localisation.

6. Table selon l'une quelconque des revendications 2 à 4 ayant un curseur sans fil et des moyens de détection synchrone utilisant un signal (H) de référence de phase du signal de la bobine émettrice, caractérisée en ce que le curseur comprend un circuit oscillateur local (12) alimentant la bobine, le circuit de traitement comprend un circuit d'extraction d'horloge (50) pour fournir le signal de référence de phase (H) à partir d'au moins un des signaux reçus des bobines de localisation, ledit circuit d'extraction d'horloge comprenant un circuit de détection de maximum (52) pour sélectionner le signal de plus forte amplitude parmi une pluralité de signaux formés chacun par au moins un des signaux reçus des bobines de localisation, un circuit (54, 56, 58) de mise en forme du signal sélectionné et une boucle de verrouillage de phase (60) recevant le signal sélectionné mis en forme et fournissant le signal de référence de phase (H), et en ce que, pour au moins une direction de la table, les bobines de localisation comprennent au moins des deuxièmes bobines (Bx1 à Bxm) qui partagent la table en plusieurs zones successives de même dimension (Lx) suivant ladite direction, et les premières bobines (bx1 à bxn) qui partagent chaque zone et forment un motif répétitif le long de ladite direction avec un pas égal à ladite dimension des zones, les premières bobines occupant des mêmes positions dans les différentes zones étant connectées en série, de sorte que la position de la bobine émettrice (L) par rapport à la table dans ladite direction est déterminée au moyen du circuit de traitement (20) par identification de la zone de la table où se trouve la bobine émettrice, au moyen de signaux reçus des deuxièmes bobines de localisation, et par localisation de la bobine émettrice dans cette zone, au moyen des signaux reçus des premières bobines de localisation.

7. Table selon la revendication 6, caractérisée en ce que le curseur (10) comprend au moins une touche (17, 19) dont l'actionnement doit être détecté par le circuit de traitement, et des moyens de codage (18, 16) agissant en réponse à l'actionnement de la touche par modification du signal émis par la bobine émettrice (L), et en ce que le circuit de traitement comprend des moyens de détection (62, 64, 66) recevant un signal formé par au moins un des signaux reçus des bobines de localisation pour détecter la modification éventuelle du signal émis par la bobine émettrice et fournir une information relative à l'actionnement de la touche.

8. Table selon la revendication 7, caractérisée en ce que les moyens de codage agissent en réponse à l'actionnement de la touche (17, 19), en interrompant le signal émis par la bobine émettrice (L), pendant une durée prédéterminée, de façon périodique.

9. Table selon la revendication 5 ou 6 ayant des moyens de détection synchrone utilisant un signal (H) de référence de phase du signal de la bobine émettrice, caractérisée en ce qu'une bobine de localisation définissant une zone de la table et ayant un premier sens de bobinage est connectée en série avec une bobine de localisation définissant une autre zone de la table et ayant un sens de bobinage inverse du premier, et en ce que les bobines de localisation connectées en série définissent des zones non contiguës de la table.

10. Table selon la revendication 5 ou 6, caractérisée en ce que les deuxièmes bobines ont des largeurs différentes multiples de la longueur d'une zone et sont entrelacées de sorte que la combinaison des signaux reçus des bobines constitue un codage de la position de la zone où se trouve la bobine émettrice.


**Patentansprüche**

1. Digitalisiertafel bestehend aus einer Tafel, in der Lokalisierungsspulen (bx1 bis bxn, by1 bis byq) angeordnet sind, die ein Raster bilden, einem auf dieser Tafel frei beweglichen Positionszeiger (10), der eine Sendespule (L) besitzt, die durch einen Wechselstrom gespeist wird, und einer Auswerteschaltung (20), welche Signale empfängt, die in den Lokalisierungsspulen durch elektromagnetische Kopplung mit der Sendespule induziert werden, und die Berechnungsmittel (30) enthält, um aus der Amplitude des Signals der Lokalisierungsspulen (bx1 bis bxn, by1 bis byq) eine erste Koordinate (x), gemessen in einer ersten Richtung Richtung der Tafel, und eine zweite Koordinate (y), gemessen in einer zweiten Richtung der Tafel zu ermitteln, wodurch die Position der Sendespule in bezug auf die Tafel bestimmt wird, dadurch gekennzeichnet, daß die Auswerteschaltung mindestens Mittel zur Kombination der von den Lokalisierungsspulen (bx1 bis bxn) erhaltenen Signale für die Lieferung folgender Größen enthält:

$$P1x = \sum_{i=1}^{i=n} Vix\ f1\ (xi);$$

und

$$P2x = \sum_{i=1}^{i=n} Vix\ f2\ (xi),$$

wobei

der Wert i von 1 bis n läuft;

n die Anzahl der Lokalisierungsspulen bxi angibt;

Vix die Amplitude eines von der Lokalisierungsspule bxi über die Sendespule erhaltenen Signals bezeichnet;

xi die Positionskoordinate der Spule bxi in der Tafel, gemessen in der ersten Richtung der Tafel, unter Bezug auf einen festgelegten Ursprung ist;

f1(xi) ein erster Gewichtungsfaktor für die Amplitude ist, dessen Größe von xi abhängt; und

f2(xi) ein zweiter Gewichtungsfaktor für die Amplitude ist, der sich vom ersten Gewichtungsfaktor unterscheidet und dessen Größe von xi abhängig ist;

die Koordinate x der Position der Sendespule auf der Tafel unter Bezug auf den Nullpunkt wie folgt gegeben ist:

$$x = f3(P1x/P2x)$$

wobei f3(x) einen unter anderem von f1(xi) und f2(xi) bestimmten Zusammenhang angibt.

2. Tafel nach Anspruch 1, die mindestens eine Anordnung von Lokalisierungsspulen (bx1 bis bxn) umfaßt, die gegeneinander in der ersten Richtung der Tafel angeordnet sind und einen Bereich abdecken, der mindestens einen Teil der Länge der Tafel in dieser Richtung belegt, dadurch gekennzeichnet, daß gilt:

$$f1(xi) = \sin(2\pi xi/Lx);$$
$$f2(xi) = \cos(2\pi xi/Lx);$$

und

$$f3(P1x/P2x) \simeq Lx/2\pi \, \arctan(P1x/P2x);$$

Lx ist hierbei die Größe des Bereichs, gemessen in der betreffenden Richtung der Tafel.

3. Tafel nach Anspruch 1 oder 2, dadurch gekennzeichnet, daß diese Mittel zur Bestimmung der ersten Koordinate (x) enthält, wobei diese Mittel folgendes umfassen:
   - ein analoges Schaltnetzwerk zur Bestimmung der Signale P1x und P2x;
   - eine Schaltung zur Feststellung, welches der Signale P1x und P2x den höheren Pegel aufweist;
   - einen Analog/Digitalwandler mit einem Referenzspannungseingang (Pref) und einem Eingang für ein analoges Signal (Pin), das relativ zur Referenzspannung in einen numerischen Wert zu wandeln ist;
   - eine erste Umschalteinrichtung, die mit der Schaltung in der Weise zusammenarbeitet, daß das Signal P1x oder P2x mit dem jeweils höheren Pegel an den Referenzeingang (Pref) des Analog/Digitalwandlers gelegt wird;
   - eine zweite Umschalteinrichtung, die mit der Schaltung in der Weise zusammenarbeitet, daß das Signal P2x oder P1x mit dem jeweils niedrigeren Pegel an den Signaleingang (Pin) des Analog/Digitalwandlers gelegt wird; und
   - einen Rechner zur Bestimmung des Wertes x = (Lx/2$\pi$) arctan(Pin/Pref) oder $\pi$/2 - (Lx/2$\pi$) arctan(Pin/Pref) aus dem Ausgangswert des Analog/Digitalwandlers;

4. Tafel nach Anspruch 2 oder 3, die Mittel zur Synchronisierung anhand eines Phasenreferenzsignals (H) aus dem Signal der Sendespule besitzt, dadurch gekennzeichnet, daß die Anordnung der Lokalisierungsspulen (bxi bis bxn) durch zwei Untergruppen mit jeweils gleichen Anzahlen von Spulen gebildet wird, wobei eine erste Untergruppe einen ersten Bereich der Tafel und die zweite Untergruppe einen zweiten Bereich der Tafel abdeckt, und daß jede Spule der ersten Untergruppe an einer Position in einem ersten Bereich der Tafel und mit einem ersten Wicklungssinn mit einer Spule der zweiten Untergruppe an der gleichen Position im zweiten Bereich der Tafel und mit einem entgegengesetzten Wicklungssinn gegenüber der ersten in Serie geschaltet ist.

5. Tafel nach einem der Ansprüche 2 bis 4, dadurch gekennzeichnet, daß die Tafel mindestens in der ersten Richtung der Tafel zweite Spulen (Bx1 bis Bxm) umfaßt, durch die die Tafel in dieser Richtung in mehrere aufeinanderfolgende Zonen gleicher Größe (Lx/2$\pi$) unterteilt wird, und weiter erste Spulen (bx1 bis bxn) umfaßt, die jede Zone unterteilen und so ein sich in gleichen Abständen entsprechend der Länge dieser Zonen wiederholendes Muster entlang dieser Richtung bilden, wobei diejenigen ersten Spulen, die die gleichen Positionen in den verschiedenen Zonen einnehmen, so in Serie geschaltet sind, daß die Position der Sendespule (L) in der betreffenden Richtung in Bezug auf die Tafel mittels einer Auswerteschaltung (20) durch Identifizierung der Zone der Tafel, in der sich die Sendespule befindet, sowie mittels von zweiten Lokalisierungsspulen erhaltenen Signalen und durch Lokalisierung der Sendespule in dieser Zone mittels von den ersten Lokalisierungsspulen erhaltenen Signalen bestimmt werden kann.

6. Tafel nach einem der Ansprüche 2 bis 4, die mit einem drahtlosen Positionszeiger und Mitteln zur Synchronisierung anhand eines Phasenreferenzsignals (H) aus dem Signal der Sendespule versehen ist, dadurch gekennzeichnet, daß der Positionszeiger eine lokale Oszillatorschaltung (12) zur Speisung der Spule umfaßt, wobei die Auswerteschaltung eine Taktableitungsschaltung (50) zur Lieferung des Phasenreferenzsignals (H) aus mindestens einem der von den Lokalisierungsspulen erhaltenen Signale umfaßt, wobei die Taktableitungsschaltung eine Schaltung zur Maximalwerterkennung (52) zur Auswahl des Signals mit der höchsten Amplitude aus einer Vielzahl von Signalen, von denen jedes aus mindestens einem der von den Lokalisierungsspulen erhaltenen Signale gebildet wird, eine Signalformungsschaltung (54, 56, 58) für ein ausgewähltes Signal und eine Phasenverriegelungsschleife (60), die das ausgewählte und geformte Signal übernimmt und das Phasenreferenzsignal (H) liefert, und daß in mindestens einer Richtung der Tafel die Lokalisierungsspulen mindestens zweite Spulen (Bx1 bis Bxm) beinhalten, welche die Tafel in dieser Richtung in mehrere aufeinanderfolgende Zonen gleicher Größe (Lx) unterteilen, und daß die ersten Spulen (bx1 bis bxn) jede Zone unterteilen und ein sich in gleichen Abständen entsprechend der Länge dieser Zonen wiederholendes Muster entlang dieser Richtung bilden, wobei diejenigen ersten Spulen, die die gleichen Positionen in den verschiedenen Zonen einnehmen, so in Serie geschaltet sind, daß die Position der Sendespule (L) in der betreffenden Richtung in Bezug auf die Tafel mittels einer Auswerteschaltung (20) durch Identifizierung der Zone der Tafel, in der sich die Sendespule befindet, sowie mittels von zweiten Lokalisierungsspulen erhaltenen Signalen und durch Lokalisierung der Sendespule in dieser Zone mittels von den ersten Lokalisierungsspulen erhaltenen Signalen bestimmt werden kann.

7. Tafel nach Anspruch 6, dadurch gekennzeichnet, daß der Positionszeiger (10) mindestens eine Drucktaste (17, 19) enthält, deren Betätigung von der Auswerteschaltung erkannt werden muß, und Kodierungsmittel (18, 16) besitzt, die in Reaktion auf die Betätigung der Taste eine Modifikation des von der Sendespule (L) abgegebenen Signals bewirken, und daß die Auswerteschaltung Erkennungsmittel (62, 64, 66) umfaßt, die ein aus mindestens einem der von den Lokalisierunsspulen empfangenen Signale gebildetes Signal erhalten, um die eventuelle Modifikation des von der Sendespule abgegebenen Signals zu erkennen und eine Information bezüglich der Betätigung der Drucktaste zu liefern.

8. Tafel nach Anspruch 7, dadurch gekennzeichnet, daß die Kodierungsmittel in Reaktion auf die Betätigung der Drucktaste (17, 19) so wirksam werden, daß sie das von der Sendespule (L) abgegebene Signal während einer festgelegten Zeitdauer in periodischer Weise unterbrechen.

9. Tafel nach Anspruch 5 oder 6 mit synchronen Erkennungseinrichtungen, die ein Phasenreferenzsignal (H) des Signals von der Sendespule verwenden, dadurch gekennzeichnet, daß eine Lokalisierungsspule, die eine Zone der Tafel definiert und einen ersten Wicklungssinn aufweist, mit einer Lokalisierungsspule, die eine andere Zone der Tafel definiert und einen zur ersten umgekehrten Wicklungssinn aufweist, in Serie geschaltet ist, und daß die in Serie geschalteten Lokalisierungsspulen nicht aufeinanderfolgende Zonen der Tafel definieren.

10. Tafel nach Anspruch 5 oder 6, dadurch gekennzeichnet, daß die zweiten Spulen um ein Vielfaches der Länge einer Zone unterschiedliche Größen aufweisen und so ineinandergeschachtelt sind, daß die Kombination der von den Spulen empfangenen Signale eine Positionskodierung für diejenige Zone bildet, in der sich die Sendespule befindet.

**Claims**

1. Digitiser table comprising a table in which are located localisation coils (bx1 to bxn, by1 to byq) constituting a framework, a cursor (10) movable with respect to the table and comprising an emitter coil (L) fed by alternating current and a processing circuit (20) receiving the signals induced in the localisation coils by electromagnetic coupling with the emitter coil and comprising calculating means (30) to determine, starting from the amplitude of the signals of the localisation coils (bx1 to bxn, by1 to byq) a first coordinate (x) measured according to a first table direction and a second coordinate (y) measured on a second direction of the table, establishing the position of the emitter coil with respect to the table, characterised in that the processing circuit comprises at least means to combine the signals received from the localisation coils (bx1 to bxn) with the object of providing the quantities:

$$P1x = \sum_{i=1}^{i=n} Vix\ f1\ (xi);$$

and

$$P2x = \sum_{i=1}^{i=n} Vix\ f2\ (xi)$$

i being a whole number varying from 1 to n;
n being the number of localisation coils bxi
Vix being the amplitude of a signal representative of the signal received by the coil bxi via the emitter coil;
xi being the coordinate of the position of the coil bxi in the table, measured according to the said first direction of the table with respect to a predetermined origin;
f1(xi) being a first amplitude weighting factor, the size of which is dependent on xi; and
f2(xi) being a second amplitude weighting factor different from the first and of which the size is dependent on xi; the coordinate x of the position of the emitter coil in the table, with respect to the said origin, being given by:

$$x = f3\ (P1x/P2x)$$

f3 (x) being a relationship determined among others by f1 (xi) and f2 (xi).

2. Table according to claim 1 comprising at least one assembly of localisation coils (bx1 to bxn) spaced one from another in the first direction of the table and covering a zone occupying at least part of the dimension of the table in this direction, characterised in that:

$$f1\ (xi) = \sin\ (2\pi xi/Lx);$$
$$f2\ (xi) = \cos\ (2\pi xi/Lx);$$

and

$$f3\ (P1x/P2x) \simeq Lx/2\pi\ \text{arc tan}\ (P1x/P2x);$$

Lx being the width of the said zone measured according to the said direction of the table.

3. Table according to claim 1 or 2, characterised in that it comprises means to determine the said first coordinate (x), the said means comprising:
   - an analogue network to determine the signals P1x and P2x;
   - a circuit establishing which of the signals P1x and P2x has the greater value;
   - an analogue/digital converter having a reference voltage input (Pref) and an analogue signal input (Pin) to convert into a numerical value related to said reference voltage;
   - a first switching device cooperating with the said circuit in such a fashion as to apply the signal P1x or P2x having the greater value to the reference input (Pref) of the analogue/digital converter;
   - a second switching device cooperating with the said circuit in such a fashion as to apply the signal P2x or P1x having the weaker value to the signal input (Pin) of the analogue/digital converter; and
   - a calculator to determine, starting from the output of the said analogue/digital converter, the value x=(Lx/2π) arc tan (Pin/Pref) or π/2-(Lx/2π) arc tan (Pin/Pref);

4. Table according to claim 2 or 3 having synchronous detection means using a reference signal (H) of the phase of the signal of the emitter coil, characterised in that the assembly of localisation coils (bxi to bxn) is formed of two sub-assemblies comprising the same number of coils, a first sub-assembly covering a first part of the table and in that each coil of the first sub-assembly occupies a position in the first part of the table and having a first winding sense is connected in series with a coil of the second sub-assembly occupying the same position in the second part of the table and having an inverse winding sense from the first.

5. Table according to any one of claims 2 to 4, characterised in that the table comprises, for at least the first direction of the table, second coils (Bx1 to Bxm) which partition the table into several successive zones of the same dimension (Lx/2π) according to the said direction and first coils (bx1 to bxn) which partition each zone and form a repetitive pattern along the said direction with a pitch equal to the said dimension of the zones, the first coils occupying the same positions in different zones being connected in series in such a fashion that the position of the emitter coil (L) with respect to the table in the said direction is determined by means of the processing circuit (20) by identification of the zone of the table where the emitter coil is located by means of signals received from the second localisation coils and by localisation of the emitter coil in this zone by means of the signals received from the first localisation coils.

6. Table according to any one of claims 2 to 4 having a cursor without wires and synchronous detection means utilising a reference signal (H) of the phase of the signal of the emitter coil, characterised in that the cursor comprises a local oscillator circuit (12) feeding the coil, the treatment circuit comprising a clock extraction circuit (50) to furnish the phase reference signal (H) starting from at least one of the signals received from the localisation coils, the said clock extraction circuit comprising a maximum detector circuit (52) to select the strongest amplitude signal from among a plurality of signals each formed via from at least one of the signals received from the localisation coils, a circuit (54, 56, 58) for shaping the selected signal and a phase locking latch (60) receiving the shaped selected signal and providing the phase reference signal (H) and in that, for at least one direction of the table, the localisation coils comprise at least second coils (Bx1 to Bxm) which divide the table into several successive zones of the same dimension (Lx) along the said direction and the first coils (bx1 to bxn) which partition each zone and form a repetitive motif along the said direction with a pitch equal to the said dimension of the zones, the first coils occupying the same positions in the different zones being connected in series, in such a fashion that the position of the emitter coil (L) with reference to the table in the said direction is determined by means of the processing circuit (20) by identification of the zone of the table where the emitter coil is located, by means of the signals received from the second localisation coils and by localisation of the emitter coil in this zone by means of the signals received from the first localisation coils.

7. Table according to claim 6, characterised in that the cursor (10) comprises at least one button (17, 19), actuation of which should be detected by the processing circuit, and coding means (18, 16) acting in response to the actuation of the button by modification of the signal emitted by the emitter coil (L) and in that the processing circuit comprises detection means (62, 64, 66) receiving a signal formed by at least one of the signals received from the localisation coils to detect any change of the signal emitted by the emitter coil and to provide information relative to the actuation of the button.

8. Table according to claim 7, characterised in that the coding means act in response to the actuation of the button (17, 19) by interrupting the signal emitted by the emitter coil (L) lasting for a predetermined time in periodic fashion.

9. Table according to claim 5 or 6 having means for synchronous detection utilising a reference signal (H) of the phase of the signal of the emitter coil, characterised in that a localisation coil defining a zone of the table and having a first winding sense is connected in series with a localisation coil defining another zone of the table and having its winding sense inverse relative to the first and in that the localisation coils connected in series define non-contiguous zones of the table.

10. Table according to claim 5 or 6, characterised in that the second coils have different widths and multiples of the length of the zone and are interlaced in such a fashion that the combination of the signals received by the coils constitutes an encoded form of the position of the zone where the emitter coil is located.

Fig. 1

# Fig. 2A

# Fig. 2B

Fig. 3

Fig. 4

Fig. 8

Fig. 5

Bx1    Bx2                                                    Bxm

Fig. 6

Bx1    Bx2                                                    Bxm

Fig. 7

Bx1      Bx2              Bx3        Bx4

Fig. 9

B𝔁1 → □ → 22𝔁1 ▷ → 24𝔁1 □ → AMPLITUDE →
SIGNE →

□ → ▷ → □ → →
→

□ → ▷ → □ → →
→

B𝔁m → □ → 22𝔁m' ▷ → 24𝔁m' □ → →
→

H

30

Fig. 10

B𝔁1 → □ → 22𝔁'1 ▷ → 24𝔁'1 □ → AMPLITUDE →
B𝔁3 →

B𝔁2 → □ → 22𝔁'2 ▷ → 24𝔁'2 □ → →

B𝔁4 → □ → 22𝔁'3 ▷ → 24𝔁'3 □ → →

H

30

Fig. 11

Fig. 12

Fig. 13

EP 0 399 906 B1

FIG.14

**DÉBUT DE MESURE RATIOMÉTRIQUE**

ACTIVER C1 POUR METTRE
Er = Uref.

ACTIVER C2 POUR METTRE
Es = Psx

LIRE ET MEMORISER
SN1 (= Psx/Uref.)

ACTIVER C2 POUR METTRE
Es = Pcx

LIRE ET MEMORISER
SN2 (= Pcx/Uref.)

COMPARER SN1 ET SN2

SN1 > SN2 ?

NON

OUI

ACTIVER C1 POUR METTRE
Er = Psx

ACTIVER C2 POUR METTRE
Es = Pcx

LIRE SN3 (= Pcx/Psx)

CALCULER
$X = \pi/2 - (Lx/2\pi) ARCTAN (SN3)$

ACTIVER C1 POUR METTRE
Er = Pcx

ACTIVER C2 POUR METTRE
Es = Psx

LIRE SN4 (= Psx/Pcx)

CALCULER
$X = (Lx/2\pi) ARCTAN (SN4)$

MÉMORISER X

26

FIG. 15

EP 0 399 906 B1